Europäisches Patentamt

European Patent Office

Office européen des brevets

(19)

(11) Numéro de publication: **0 187 632**
**A1**

(12) ## DEMANDE DE BREVET EUROPEEN

(21) Numéro de dépôt: **85870179.0**

(22) Date de dépôt: **11.12.85**

(51) Int. Cl.⁴: **A 01 D 23/06**
**A 01 D 27/02**

(30) Priorité: **20.12.84 BE 901334**

(43) Date de publication de la demande:
**16.07.86 Bulletin 86/29**

(84) Etats contractants désignés:
**DE FR IT NL**

(71) Demandeur: **AGRI-SERVICE Sprl**
**Place, 58c**
**B-7564 Molembaix(BE)**

(72) Inventeur: **Dutrieux, Jean**
**58c Place**
**B-7564 Molenbaix(BE)**

(54) **Machine pour la récolte de tubercules.**

(57) Machine pour la récolte de tubercules qui comprend une effeuilleuse munie de scalpers (22) et qui est caractérisée en ce que les patins de guidage (16) des éléments arracheurs (20) sont intégrés dans le rotor effeuilleur. Ce dernier est donc muni de fléaux (12) qui par leur rotation balaient les surfaces comprises entre les patins (16). Ces patins supportent en partie la coque (10) par l'intermédiaire des réglages (17) et (18).

Les éléments arracheurs sont fixés sur cette coque (10) par l'intermédiaire de clames (26) tandis que les scalpers sont fixés sur les patins.

EP 0 187 632 A1

Croydon Printing Company Ltd.

# Machine pour la récolte de tubercules

La présente invention se rapporte à une machine pour la récolte de tubercules et plus particulièrement la récolte de betteraves.

Actuellement les machines pour la récolte de betteraves sont en général équipées à l'avant d'une effeuilleuse suivie d'éléments scalpeurs.

Derrière cet ensemble effeuilleuse-scalpeuse sont disposés les éléments arracheurs généralement composés de patins de guidage suivis de disques ou socs arracheurs après quoi les betteraves sont ramassées par des turbines ou soleils rotatifs.

Tous ces organes disposés les uns derrière les autres forment un ensemble assez encombrant, ce qui pose surtout des problèmes dans le cas où ces organes sont montés en porte-à-faux sur la machine. En effet, ce porte-à-faux important allourdi l'ensemble de la structure de support, diminue la visibilité de l'opérateur et rend difficile le réglage en hauteur des divers organes ainsi que la stabilité de la machine. En plus, et pour ne pas augmenter ce porte-à-faux, la longueur des patins de guidage des éléments arracheurs est souvent limitée au minimum, ce qui est néfaste pour la qualité du travail (mauvais guidage, beaucoup de pertes, etc.).

Le but de la présente invention est de raccourcir l'ensemble effeuilleuse-scalpeuse-arracheuse et d'améliorer le guidage au niveau de l'arrachage.

A cet effet, l'ensemble effeuilleuse-scalpeuse-arracheuse, objet de l'invention, est caractérisé essentiellement en ce que les patins de guidage des éléments arracheurs sont intégrés en dessous de l'effeuilleuse-scalpeuse.

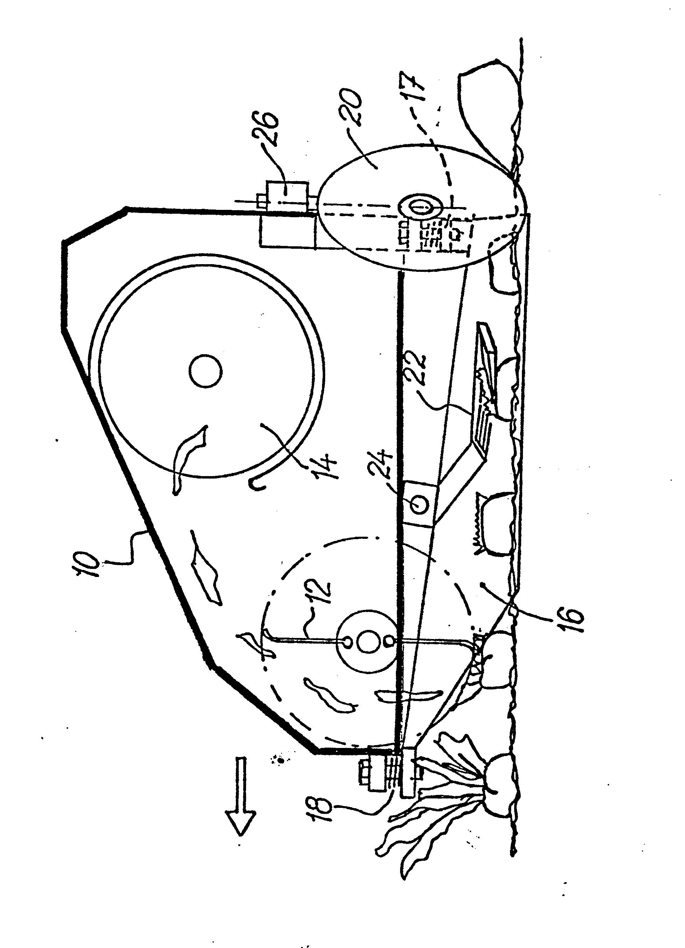

Afin de mieux comprendre l'invention, on en décrira ci-après un exemple de réalisation à l'aide du dessin annexé lequel montre une vue en coupe transversale d'un ensemble effeuilleuse-scalpeuse-arracheuse selon l'invention.

Sur ce dessin on a représenté le châssis 10 de l'effeuilleuse comprenant comme d'habitude un rotor à fléaux 12 à l'avant suivi d'un convoyeur à vis sans fin 14.

Conformément à l'invention, les patins de guidage 16 des éléments ou disques arracheurs 20 sont montés en dessous du châssis 10 de l'effeuilleuse ; ils peuvent être montés par exemple de manière réglable en hauteur à l'avant (18) et à l'arrière (17). On veillera bien sûr à supprimer les fléaux 12 au niveau de chaque patin 16.

Les organes scalpeurs 22 sont intégrés en 24 entre les patins de guidage 16.

Les disques arracheurs 20 sont également montés sur le châssis 10 de l'effeuilleuse par clamage 26 à l'arrière des patins 16.

Il en résulte de ce nouveau montage que les patins 16 n'ont plus seulement la fonction de guider les éléments arracheurs 20 mais servent également comme support de l'effeuilleuse 10 qui, de ce fait, est mieux stabilisée et réagit mieux aux irrégularités du sol. Les patins 16 réalisent en plus un contrôle efficace de la hauteur du rotor 12 et des éléments scalpeurs 22.

Une autre conséquence de l'invention est que les patins de guidage 16, qui sont disposés entre les fléaux 12 du rotor de coupe, sont de ce fait balayés et nettoyés en permanence par la rotation à grande vitesse des fléaux 12 ce qui évite en plus tout risque de bourrage à l'avant des patins.

Un autre avantage de l'invention est qu'il devient possible d'augmenter la longueur des patins par rapport aux dispositifs connus et d'améliorer ainsi le guidage de l'ensemble, ce qui facilite le travail et donne un meilleur rendement.

Enfin l'ensemble effeuilleuse-scalpeuse-arracheuse selon l'invention est raccourci par rapport aux dispositifs connus d'environ la moitié ce qui diminue sensiblement le porte-à-faux de l'ensemble et le rend moins lourd et plus maniable que les systèmes traditionnels.

Les éléments scalpeurs 22 intégrés dans les patins 16 sont plus légers et plus efficaces malgré un couteau et un peigne plus courts et ce, grâce à ce que les betteraves, qui au cours de leur croissance ont dévié en alignement, sont redressées par le passage des patins 16.

Bien entendu, diverses modifications peuvent être apportées par l'homme de l'art au dispositif qui vient d'être décrit uniquement à titre d'exemple non limitatif sans sortir du cadre de l'invention.

4

## REVENDICATIONS

1. Machine pour la récolte de tubercules comprenant une effeuilleuse-scalpeuse et une arracheuse, caractérisée en ce que les patins de guidage (16) des éléments arracheurs (20) sont intégrés en dessous de l'effeuilleuse-scalpeuse (10).

2. Machine selon la revendication 1, caractérisée en ce que les éléments scalpeurs (22) sont situés entre les patins de guidage (16) de l'arracheuse.

3. Machine selon la revendication 1 dans laquelle l'arracheuse est composée de patins et disques d'arrachage caractérisée en ce que les disques (20) sont montés sur le châssis (10) de l'effeuilleuse à l'arrière des patins (16).

4. Machine selon la revendication 1, dans laquelle l'arracheuse est composée de patins et de socs d'arrachage, caractérisée en ce que les socs sont montés sur le châssis (10) de l'effeuilleuse à l'arrière des patins de guidage (16).

5. Machine selon la revendication 1, caractérisée en ce que les patins de guidage (16) sont disposés entre les fléaux (12) de l'effeuilleuse et en ce qu'ils sont montés de manière réglable en hauteur à l'avant (18) et à l'arrière (17) du châssis (10) de l'effeuilleuse.

6. Machine selon les revendications 1 et 2, caractérisée en ce que les organes scalpeurs (22) sont intégrés de manière pivotante dans les patins de guidage (16).

10

26

18

12

14

24

20

22

17

16

0187632

RAPPORT DE RECHERCHE EUROPEENNE

Office européen
des brevets

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | DE-A-3 102 877 (SCHULTE)  * Pages 9-11; figures 1-5 * | 1,2,4, 6 | A 01 D   23/06  A 01 D   27/02 |
| X | FR-A-2 541 856 (DEHONDT)  * Page 3, paragraphes 5,6; page 4, figures 1,2 * | 1-3 | |
| A | FR-A-1 469 505 (WEICHEL) | | |
| A | DE-C- 263 500 (MORSO HAMMERVAERK) | | |

-----

DOMAINES TECHNIQUES
RECHERCHES (Int Cl.4)

A 01 D

Le présent rapport de recherche a été établi pour toutes les revendications

| Lieu de la recherche | Date d'achèvement de la recherche | Examinateur |
|---|---|---|
| LA HAYE | 27-03-1986 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82